# EUROPÄISCHE PATENTSCHRIFT

(11) **EP 2 527 691 B1**
(45) Veröffentlichungstag und Bekanntmachung des Hinweises auf die Patenterteilung: **08.04.2020**
(21) Anmeldenummer: 12000795.0
(22) Anmeldetag: 08.02.2012
(51) Int. Cl.: F16H 59/66, F16H 61/02, B60W 50/00

(54) **Verfahren und Vorrichtung zur vorausschauenden Bestimmung einer geeigneten Fahrstufe**
Method and device for anticipatory detection of a suitable gear
Procédé et dispositif destinés à la détermination prévisionnelle d'un rapport de boîte de vitesse adaptée

(30) Priorität: 24.05.2011 DE 102011102362
(43) Veröffentlichungstag der Anmeldung: 28.11.2012
(73) Patentinhaber: MAN Truck & Bus SE, 80995 München (DE)
(72) Erfinder: Jahn, Matthias, 48163 Münster (DE)
(74) Vertreter: Liebl, Thomas

(56) Entgegenhaltungen:
- DE-A1- 10 138 119
- DE-A1-102009 013 176
- JP-A- 7 113 866
- JP-A- 2003 065 740
- US-A1- 2003 028 291

## Beschreibung

Die Erfindung betrifft ein Verfahren zur vorausschauenden Bestimmung einer geeigneten Fahrstufe eines Automatikgetriebes eines Kraftfahrzeugs nach dem Oberbegriff des Patentanspruchs 1 und eine Vorrichtung zur Durchführung des Verfahrens nach dem Patentanspruch 6.

Insbesondere bei schweren Lastkraftwagen und anderen Transportfahrzeugen mit Automatik- oder Halbautomatikgetriebe besteht das Problem, dass die Getriebesteuerung eine Steigung oder ein Gefälle erst dann erkennt und eine entsprechende Fahrstufe gewählt wird, wenn sich das Kraftfahrzeug bereits in der Steigung oder im Gefälle befindet. Bei einer ausschließlich lastabhängigen Regelung des Automatikgetriebes kann dies dazu führen, dass ein Herunterschalten in eine geeignete Fahrstufe zu spät erfolgt, nämlich erst dann, wenn z. B, die Motorleistung für die aktuell gewählte Fahrstufe bereits nicht mehr ausreicht. Das zu späte Erkennen einer Steigung, die eine niedrigere Fahrstufe erfordert, führt dann zu Schaltfehlern im Automatikbetrieb. Um dies zu vermeiden, muss der Fahrzeugführer oftmals auf manuellen Betrieb umschalten, was Zeit in Anspruch nimmt und regelmäßig auch einen höheren Kraftstoffverbrauch zur Folge hat.

Aus der DE 10 2009 013 176 A1 ist nun ein gattungsgemäßes Verfahren bekannt, welches zur Erfassung von Streckeninformationen über die vor dem Fahrzeug liegende Strecke eine Bilderfassungseinheit verwendet. Durch eine Bildauswertung sollen Höhenänderungen und auch Richtungsänderungen der vor dem Fahrzeug liegenden Strecke ermittelt werden, wobei ein verhältnismäßig großer Technikaufwand erforderlich ist.

Weiter ist aus der DE 101 38 119 A1 ein Verfahren zum Betreiben eines elektronisch ansteuerbaren Antriebsstrangs in einem Kraftfahrzeug bekannt, wobei bei der Ermittlung der Antriebssteuersignale und der Getriebesteuersignale der Fahrstil und die lokale Position des Kraftfahrzeugs anhand von dreidimensionalen Kartendaten berücksichtigt wird.

Die US 2003/0028291 A1 betrifft lediglich ein Verfahren zur Ermittlung der Lage der optischen Achse eines von einer Sensorik einer Abstandsregeleinrichtung emittierten Laserstrahls sowie Maßnahmen zur Korrektur desselben.

Der Erfindung liegt die Aufgabe zugrunde, ein möglichst einfaches Verfahren zur vorausschauenden Bestimmung einer geeigneten Fahrstufe eines Getriebes, insbesondere Automatikgetriebes, eines Kraftfahrzeugs anzugeben.

Die Lösung dieser Aufgabe erhält man mit den Merkmalen des Patentanspruchs 1. Bevorzugte Weiterbildungen des erfindungsgemäßen Verfahrens sind in den Patentansprüchen 2 bis 5 angegeben.

Gemäß Anspruch 1 wird vorgeschlagen, dass der in einem vorgegebenen Messwinkel oder der unter einem vorgegebenen Messwinkel gemessene Abstand zu der vor dem Kraftfahrzeug sich erstreckenden Fahrbahnoberfläche gemessen wird, und dass aus dem gemessenen Abstand ein Steigungswert ermittelt wird, der zur Bestimmung der Fahrstufe dient. Da die Abstandsmessung immer in einem vorgegebenen Winkel erfolgt, kann eine Steigungsänderung der Fahrbahnoberfläche im Voraus erkannt werden, um beispielsweise bei einer stark zunehmenden Steigung eine entsprechend niedrigere Fahrstufe für das Getriebe, insbesondere Automatikgetriebe, auszuwählen. Die Abstandsmessung kann dabei mittels eines einfachen Laser-Distanzmessgeräts vorgenommen werden, wobei ein oder mehrere Distanzsensoren verwendet werden können.

Der Messwinkel ist vorzugsweise gegenüber dem Kraftfahrzeug fest vorgegeben, so dass mittels der Abstandsmessung die Steigungsänderung der vor dem Kraftfahrzeug befindlichen Fahrbahnoberfläche gemessen wird. Ein im Kraftfahrzeug angeordneter Neigungswinkelsensor kann zusätzlich die Neigung bzw. den Steigungswinkel der vom Kraftfahrzeug aktuell befahrenen Fahrbahnoberfläche messen, so dass in Kombination mit der Abstandsmessung vor dem Kraftfahrzeug die Neigung der Fahrbahnoberfläche bestimmt werden kann.

Die vor dem Kraftfahrzeug vorgenommene Abstandsmessung kann aber auch in einem fest vorgegebenen Messwinkel erfolgen, der gegenüber der Horizontalen festgelegt ist. In diesem Fall muss beispielsweise ein verwendeter Distanzsensor so am Kraftfahrzeug angebracht sein, dass dieser unabhängig von der Neigung des Kraftfahrzeugs immer im gleichen Winkel oder vorzugsweise parallel zur Horizontalen ausgerichtet ist. Ein zusätzlicher Neigungswinkelsensor kann dann im Kraftfahrzeug entfallen.

Wesentlich ist bei dem erfindungsgemäßen Verfahren auch, dass bereits vor Erreichen einer höheren oder stärkeren Steigung oder eines stärkeren Gefälles eine geeignete Fahrstufe aktiviert wird, um auch bei einer stärkeren Steigung den Antriebsmotor in einem dafür optimalen Leistungsbereich betreiben zu können. Bei einem bevorstehenden stärkeren Gefälle kann ebenfalls eine entsprechende geeignete Fahrstufe gewählt werden, um beispielsweise eine ausreichende Bremsleistung des Motors zur Verfügung zu haben.

Der Erfindung liegt weiterhin die Aufgabe zugrunde, eine Vorrichtung zu schaffen, die eine vorausschauende Bestimmung einer geeigneten Fahrstufe für Steigungsänderungen in der Fahrstrecke ermöglicht.

Die Lösung dieser weiteren Aufgabe erhält man mit den Merkmalen des Patentanspruchs 6. Bevorzugte Weiterbildungen der erfindungsgemäßen Vorrichtung sind in den Patentansprüchen 7 bis 11 gekennzeichnet.

Gemäß Anspruch 6 wird zur Messung der Steigung bzw. Steigungsänderung der vor dem Kraftfahrzeug befindlichen Fahrbahnoberfläche eine Messeinrichtung vorgeschlagen, die wenigstens einen Distanzsensor umfasst. Der mittels des Distanzsensors erfasste Abstandswert verringert sich bei zunehmender Steigung, so dass daraus ein entsprechender Steigungswert zur vorausschauenden Bestimmung der zu wählenden Fahrstufe für das Getriebe, insbesondere Automatikgetriebe, abgeleitet werden kann. Da zeitlich fortlaufend entsprechende Abstandswerte ermittelt werden können, kann daraus die Änderungsgeschwindigkeit der Steigung erfasst und ebenfalls zur Bestimmung einer geeigneten Fahrstufe herangezogen werden.

Die ermittelten Abstandswerte können in einer Bewertungseinrichtung in einen die Neigung der Fahrbahn gegenüber der Horizontalen kennzeichnenden Neigungswert umgewandelt werden. Anhand des jeweiligen Neigungswerts, vorzugsweise unter Berücksichtigung weiterer Fahrbetriebsparameter, kann in einer Getriebesteuerung eine geeignete Fahrstufe rechtzeitig aktiviert werden, damit auch in einem sich stark ändernden Fahrbahnprofil oder auch im Gelände ein reibungsloser und auch kraftstoffsparender Fahrbetrieb möglich ist.

Bei der vorausschauenden Wahl einer geeigneten Fahrstufe ist insbesondere auch der Zeitpunkt wesentlich, zu welchem die jeweils bestimmte Fahrstufe aktiviert wird. Die Getriebesteuerung kann hierfür ein Programm enthalten, mit dem die Fahrstufe und der Zeitpunkt der Aktivierung unter Berücksichtigung von Fahrbetriebsparametern bestimmt wird.

Weiterhin kann vorgesehen sein, dass dem Fahrzeugführer die vorgeschlagene geeignete Fahrstufe in einer Anzeige vor deren Aktivierung signalisiert wird. Der Fahrzeugführer hat dann immer noch die Möglichkeit, eine automatisch erfolgende Fahrstufenänderung zu unterbinden, falls dies aus seiner Sicht zweckmäßig erscheint.

Die Messeinrichtung für den Abstand zwischen Kraftfahrzeug und Fahrbahnoberfläche kann in einfacher Weise als Laser-Distanzmesseinrichtung ausgebildet sein. Derartige Laser-Distanzmesseinrichtungen werden auf Baustellen und zur Vermessung von Entfernungen im Gelände vielfach verwendet.

Die Erfindung wird nachfolgend anhand eines in der Zeichnung dargestellten Ausführungsbeispiels näher erläutert.

Es zeigen:
- Fig. 1: ein Blockschaltbild zur Veranschaulichung des erfindungsgemäßen Verfahrens und zur schematischen Darstellung der erfindungsgemäßen Vorrichtung und
- Fig. 2: unterschiedliche Fahrstreckenprofile A, B, C auf denen sich jeweils ein Kraftfahrzeug mit wenigstens einem Distanzsensor befindet.

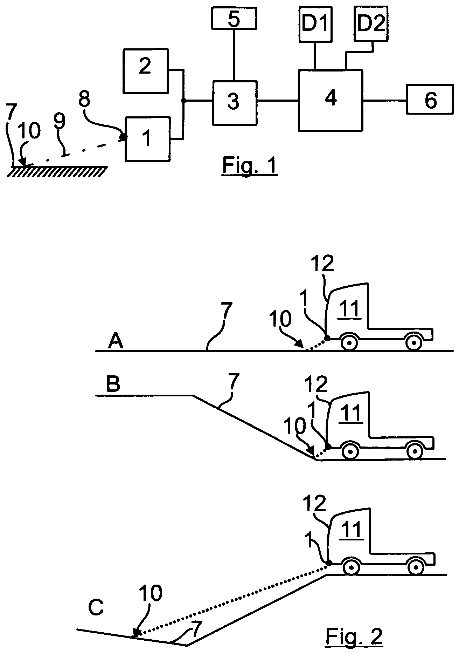

Das in Fig. 1 dargestellte Blockschaltbild zeigt die Einrichtungen in einem Kraftfahrzeug, die zur vorausschauenden Bestimmung einer geeigneten Fahrstufe eines Automatikgetriebes beispielhaft verwendet werden. Die in dem dargestellten Ausführungsbeispiel verwendeten Einrichtungen bestehen aus einem Distanzsensor 1, einem Neigungssensor 2, einer Bewertungseinrichtung 3, einer Getriebesteuerung 4 sowie einer ersten Datenübertragungseinrichtung D1 und einer zweiten Datenübertragungseinrichtung D2. Außerdem ist die Bewertungseinrichtung 3 mit einer Anzeige 5 verbunden, um dem Fahrzeugführer eine Information über die vorgesehene Fahrstufe anzeigen zu können.

Die Getriebesteuerung 4 steuert ein Automatikgetriebe 6 in Abhängigkeit von Fahrbetriebsparametern, die über die Datenübertragungseinrichtungen D1 und D2 an die Getriebesteuerung übertragen werden, und in Abhängigkeit von der Steigung oder dem Gefälle einer vor dem Fahrzeug liegenden Fahrstrecke 7. Bei der Datenübertragungseinrichtung D1 kann es sich beispielsweise um eine Einrichtung zur Einstellung des Fahrmodus handeln, beispielsweise um einen Geländemodus oder einen Kraftstoffsparmodus einzustellen, wobei dies mit einer entsprechenden Dateninformation der Getriebesteuerung 4 mitgeteilt wird. Außerdem kann die Datenübertragungseinrichtung D2 Fahrbetriebsparameter an die Getriebesteuerung 4 übermitteln, die beispielsweise den aktuellen Motorbetrieb, die Fahrgeschwindigkeit, das Fahrzeuggewicht, GPS-Informationen oder andere Parameter betreffen.

Zur Ermittlung der Steigung bzw. des Gefälles an der Fahrstrecke 7 ist hier als Distanzsensor 1 eine Laser-Distanzmesseinrichtung mit einem Laser-Sende-Empfangselement 8 vorgesehen, die einen Laser-Messstrahl 9 in einem vorgegebenen Winkel in Richtung Fahrbahnoberfläche 10 der Fahrstrecke 7 abstrahlt und damit die Entfernung zur Fahrbahnoberfläche 10 misst. Befindet sich das Fahrzeug auf einer absolut ebenen Fahrstrecke 7, die horizontal ausgerichtet ist, ändert sich die gemessene Entfernung nicht. Erst wenn vor dem Fahrzeug die Fahrstrecke 7 in eine Steigung oder ein Gefälle übergeht, ergibt die Messung mittels des Distanzsensors 1 eine Abstandsänderung. Diese Abstandsänderung wird in der Bewertungseinrichtung 3 bewertet, wobei hierzu auch die aktuelle Neigung des Fahrzeugs in die Bewertung eingehen kann. Hierzu ist der Neigungssensor 2 ebenfalls mit der Bewertungseinrichtung 3 verbunden, um dieser laufend mitteilen zu können, ob sich das Fahrzeug bereits in einem Gefälle oder einer Steigung befindet und wie stark dieses Gefälle oder die Steigung ist. Befindet sich das Kraftfahrzeug z. B. bereits in einer Steigung und stellt der Distanzsensor 1 eine weitere Abstandsverringerung der Fahrbahnoberfläche 10 fest, so kann die Bewertungseinrichtung 3 den absoluten Steigungswert für die vor dem Kraftfahrzeug liegende Fahrstrecke 7 ermitteln und eine geeignete Fahrstufe für diese bevorstehende stärkere Steigung bestimmen.

Auf diese Weise kann somit vorausschauend eine geeignete Fahrstufe bestimmt werden, die von der Bewertungseinrichtung 3 einerseits der Getriebesteuerung 4 und andererseits der Anzeige 5 übermittelt wird. Anhand der weiteren Fahrbetriebsparameter kann nun die Getriebesteuerung 4 entscheiden, ob die als geeignet bestimmte Fahrstufe im Automatikgetriebe 6 aktiviert werden soll. Insbesondere besteht dabei auch die Möglichkeit, dass die Getriebesteuerung 4 unter Berücksichtigung sämtlicher ihr vorliegenden Informationen den optimalen Zeitpunkt für die Aktivierung der entsprechenden Fahrstufe bestimmt.

Anhand von Fig. 2 und der dort dargestellten unterschiedlichen Streckenprofile A, B, C wird veranschaulicht, wie sich der gemessene Abstand vom Distanzsensor 1 zur Fahrbahnoberfläche 10 der Fahrstrecke 7 in Abhängigkeit vom Streckenprofil verändert. Bei einer horizontal verlaufenden Fahrstrecke gemäß Streckenprofil A wird ein Abstand zur Fahrbahnoberfläche 10 gemessen, der größer ist als bei einer bevorstehenden Steigung, wie diese im Steckenprofil B dargestellt ist. Dagegen wird der gemessene Abstand zwischen Distanzsensor 1 und der Fahrbahnoberfläche 10 bei einem bevorstehenden Gefälle wesentlich größer, was anhand des Streckenprofils C verdeutlicht wird.

In Fig. 2 ist der Distanzsensor 1 an einem als Zugmaschine vereinfacht dargestellten Kraftfahrzeug 11 vorne im unteren Bereich angebracht. Die Positionierung des Distanzsensors 1 kann aber grundsätzlich anders gewählt werden, wobei auch mehrere seitlich versetzte und auch in der Höhe unterschiedlich positionierte Distanzsensoren 1 an der Fahrzeugfront 12 des Kraftfahrzeugs vorgesehen sein können.

## Patentansprüche

1. Verfahren zur vorausschauenden Bestimmung einer geeigneten Fahrstufe eines Automatikgetriebes (6) eines Kraftfahrzeugs (11) unter Berücksichtigung des Streckenprofils (A, B, C) einer in Fahrtrichtung vor dem Kraftfahrzeug (11) liegenden Fahrstrecke (7), **dadurch gekennzeichnet, dass** der in einem vorgegebenen Messwinkel gemessene Abstand zwischen dem Kraftfahrzeug (11) und der vor dem Kraftfahrzeug (11) sich erstreckenden Fahrbahnoberfläche (10) gemessen wird, und dass aus dem gemessenen Abstand ein Steigungswert ermittelt wird, der zur Bestimmung der Fahrstufe berücksichtigt wird.

2. Verfahren nach Anspruch 1, **dadurch gekennzeichnet, dass** der vorgegebene Messwinkel ein gegenüber dem Kraftfahrzeug (11) festgelegter Winkel ist.

3. Verfahren nach Anspruch 1, **dadurch gekennzeichnet, dass** der vorgegebene Messwinkel gegenüber der Horizontalen festgelegt ist.

4. Verfahren nach einem der vorhergehenden Ansprüche, **dadurch gekennzeichnet, dass** zusätzlich zu jedem gemessenen Abstandswert ein zum Zeitpunkt der Messung festgestellter Neigungswinkel des Kraftfahrzeugs (11) gegenüber der Horizontalen festgestellt und bei der Bestimmung der geeigneten Fahrstufe berücksichtigt wird.

5. Verfahren nach einem der vorhergehenden Ansprüche, **dadurch gekennzeichnet, dass** die für ein Gefälle oder eine Steigung geeignete Fahrstufe aktiviert wird, bevor das Kraftfahrzeug (11) das Gefälle oder die Steigung erreicht.

6. Vorrichtung zur Durchführung des Verfahrens nach einem der vorhergehenden Ansprüche, die Einrichtungen zur Auswahl einer geeigneten Fahrstufe eines Automatikgetriebes besitzt, **dadurch gekennzeichnet, dass** diese Einrichtungen wenigstens einen Distanzsensor (1) umfassen, der den Abstand zwischen dem Distanzsensor (1) und der sich vor dem Kraftfahrzeug (11) erstreckenden Fahrbahnoberfläche (10) misst.

7. Vorrichtung nach Anspruch 6, **dadurch gekennzeichnet, dass** eine Bewertungseinrichtung (3) den vom Distanzsensor (1) ermittelten Abstandswert in einen die Neigung der Fahrbahn gegenüber der Horizontalen kennzeichnenden Neigungswert umwandelt.

8. Vorrichtung nach Anspruch 7, **dadurch gekennzeichnet, dass** der Neigungswert oder eine von der Bewertungseinrichtung (3) vorgeschlagene Fahrstufe in einer Getriebesteuerung (4) zur Bestimmung einer geeigneten Fahrstufe unter Berücksichtigung weiterer Fahrbetriebsparameter ausgewertet wird.

9. Vorrichtung nach Anspruch 8, **dadurch gekennzeichnet, dass** die Getriebesteuerung (4) den Zeitpunkt der Aktivierung der geeigneten Fahrstufe unter Berücksichtigung von Fahrbetriebsparametern bestimmt.

10. Vorrichtung nach einem der Ansprüche 6 bis 9, **dadurch gekennzeichnet, dass** eine Anzeige (5) dem Fahrzeugführer die vorgeschlagene geeignete Fahrstufe signalisiert.

11. Vorrichtung nach einem der Ansprüche 6 bis 10, **dadurch gekennzeichnet, dass** der Distanzsensor (1) Teil einer Laser-Distanzmesseinrichtung ist.

12. Kraftfahrzeug, bevorzugt Nutzfahrzeug, höchst bevorzugt Lastkraftwagen oder Bus, mit einer Vorrichtung nach einem der vorhergehenden Vorrichtungsansprüche.

## Claims

1. Method for predictively determining a suitable drive position of an automatic transmission (6) of a motor vehicle (11) taking into account the route profile (A, B, C) of a route (7) lying ahead of the motor vehicle (11) in the direction of travel, **characterized in that** the distance, measured at a predefined measuring angle, between the motor vehicle (11) and the carriageway surface (10) extending ahead of the motor vehicle (11) is measured, and **in that** a gradient value is acquired from the measured distance and is taken into account in the determination of the drive position.

2. Method according to Claim 1, **characterized in that** the predefined measuring angle is an angle which is defined with respect to the motor vehicle (11).

3. Method according to Claim 1, **characterized in that** the predefined measuring angle is defined with respect to the horizontal.

4. Method according to one of the preceding claims, **characterized in that**, in addition to each measured distance value, an angle of inclination of the motor vehicle (11), defined at the time of the measurement, with respect to the horizontal is defined and is taken into account in the determination of the suitable drive position.

5. Method according to one of the preceding claims, **characterized in that** the drive position which is suitable for a negative gradient or a positive gradient is activated before the motor vehicle (11) reaches the negative gradient or the positive gradient.

6. Device for carrying out the method according to one of the preceding claims, which has apparatuses for selecting a suitable drive position of an automatic transmission, **characterized in that** these apparatuses comprise at least one distance sensor (1) which measures the distance between the distance sensor (1) and the carriageway surface (10) extending ahead of the motor vehicle (11).

7. Device according to Claim 6, **characterized in that** an evaluation device (3) converts the distance value acquired by the distance sensor (1) into an inclination value which characterizes the inclination of the carriageway with respect to the horizontal.

8. Device according to Claim 7, **characterized in that** the inclination value or a drive position which is proposed by the evaluation device (3) is evaluated in a gearbox controller (4) for determining a suitable drive position while taking into account further driving mode parameters.

9. Device according to Claim 8, **characterized in that** the gearbox controller (4) determines the time of activation of the suitable drive position while taking into account driving mode parameters.

10. Device according to one of Claims 6 to 9, **characterized in that** a display (5) signals the proposed suitable drive position to the vehicle driver.

11. Device according to one of Claims 6 to 10, **characterized in that** the distance sensor (1) is part of a laser distance-measuring device.

12. Motor vehicle, preferably utility vehicle, most preferably lorry or bus, having a device according to one of the preceding device claims.

## Revendications

1. Procédé de détermination prédictive d'un niveau de marche approprié d'une transmission automatique (6) d'un véhicule automobile (11) avec prise en compte du profil (A, B, C) d'un itinéraire (7) situé devant le véhicule automobile (11) par référence au sens de roulement, **caractérisé en ce que** la distance mesurée entre le véhicule automobile (11) et la surface de chaussée (10), s'étendant devant le véhicule automobile (11), est mesurée dans un angle de mesure spécifié et **en ce qu'**une valeur de pente, qui est prise en compte pour déterminer le niveau de marche, est déterminée à partir de la distance mesurée.

2. Procédé selon la revendication 1, **caractérisé en ce que** l'angle de mesure spécifié est un angle fixe par rapport au véhicule automobile (11).

3. Procédé selon la revendication 1, **caractérisé en ce que** l'angle de mesure spécifié est fixe par rapport à l'horizontale.

4. Procédé selon l'une des revendications précédentes, **caractérisé en ce qu'**un angle d'inclinaison du véhicule automobile (11) par rapport à l'horizontale, déterminé au moment de la mesure, est déterminé en plus de chaque valeur de distance mesurée et pris en compte dans la détermination du niveau de marche approprié.

5. Procédé selon l'une des revendications précédentes, **caractérisé en ce que** le niveau de marche approprié à une déclivité ou une pente est activé avant que le véhicule automobile (11) n'atteigne la déclivité ou la pente.

6. Dispositif destiné à la mise en œuvre du procédé selon l'une des revendications précédentes, lequel dispositif comporte des moyens de sélection d'un niveau de marche approprié d'une transmission automatique, **caractérisé en ce que** ces moyens comprennent au moins un capteur de distance (1) qui mesure la distance entre le capteur de distance (1) et la surface de chaussée (10) s'étendant devant le véhicule automobile (11).

7. Dispositif selon la revendication 6, **caractérisé en ce qu'**un dispositif d'évaluation (3) convertit la valeur de distance, déterminée par le capteur de distance (1), en une valeur d'inclinaison caractérisant l'inclinaison de la chaussée par rapport à l'horizontale.

8. Dispositif selon la revendication 7, **caractérisé en ce que** la valeur d'inclinaison ou un niveau de marche, proposé par le moyen d'évaluation (3), est évalué dans une commande de transmission (4) pour déterminer un niveau de marche approprié avec prise en compte d'autres paramètres de fonctionnement de roulement.

9. Dispositif selon la revendication 8, **caractérisé en ce que** la commande de transmission (4) détermine l'instant d'activation du niveau de marche approprié en tenant compte des paramètres de fonctionnement de roulement.

10. Dispositif selon l'une des revendications 6 à 9, **caractérisé en ce qu'un** afficheur (5) signale au conducteur du véhicule le niveau de marche approprié proposé.

11. Dispositif selon l'une des revendications 6 à 10, **caractérisé en ce que** le capteur de distance (1) fait partie d'un moyen de mesure de distance laser.

12. Véhicule automobile, de préférence véhicule utilitaire, de manière très préférée un camion ou un bus, comprenant un dispositif selon l'une des revendications de dispositif précédentes.
